# EUROPÄISCHE PATENTSCHRIFT

(11) **EP 1 409 967 B1**
(45) Veröffentlichungstag und Bekanntmachung des Hinweises auf die Patenterteilung: **11.10.2006**
(21) Anmeldenummer: 01971632.3
(22) Anmeldetag: 22.08.2001
(51) Int. Cl.: G01F 1/80, G01F 1/82

(54) **VORRICHTUNG ZUR MESSUNG EINES MASSE-STROMES**
DEVICE FOR MEASURING A MASS FLOW
DISPOSITIF DE MESURE D'UN DEBIT MASSIQUE

(30) Priorität: 23.08.2000 DE 10041433
(43) Veröffentlichungstag der Anmeldung: 21.04.2004
(73) Patentinhaber: Schenck Process GmbH, 64293 Darmstadt (DE)
(72) Erfinder: BROTZMANN, Karl, 92224 Amberg (DE); FASSBINDER, Hans-Georg, 92237 Sulzbach-Rosenberg (DE); KOPP, Hans, 92237 Sulzbach-Rosenberg (DE); SCHUTTE, Karsten, 92224 Amberg (DE)
(74) Vertreter: Behrens, Helmut
(86) Internationale Anmeldenummer: PCT/DE2001/003199
(87) Internationale Veröffentlichungsnummer: WO 2002/016882

(56) Entgegenhaltungen:
- EP-A- 0 474 121
- DE-A- 3 507 993
- GB-A- 711 109
- US-A- 2 771 773
- US-A- 5 353 647

## Beschreibung

Die Erfindung betrifft eine Vorrichtung zur Messung eines vorzugsweise mehrphasigen Massestroms nach dem Oberbegriff des Patentanspruchs 1.

Im Allgemeinen wird in solchen Vorrichtungen Schüttgut axial auf ein Meßrad geleitet, das radial verlaufende Leitschaufeln aufweist. Das Meßrad wird mit konstanter Drehzahl angetrieben und das Antriebsdrehmoment gemessen. Die Umlenkung des axial eingeleiteten Schüttgutes führt zu einer Änderung dieses Drehmoments gegenüber dem Leerlaufdrehmoment. Veränderungen im Massestrom des Schüttguts beeinflussen das Drehmoment ebenfalls, wobei diese Veränderung des Drehmoments ein direktes Maß für die Schwankungen des Schüttgutstroms darstellt. Ein breiter Anwendungsbereich derartiger Vorrichtungen besteht in der pneumatischen Förderung von Schüttgütern jeglicher Art für so unterschiedliche Anwendungsgebiete wie z. B. die Eisen- und Stahlindustrie, die Baustoffindustrie oder die chemische Verfahrenstechnik etc.

In den bekannten Vorrichtungen gemäß des Oberbegriffs des Hauptanspruchs erfolgt die Messung des Drehmoments bzw. seiner Veränderung mittels eines Getriebes. So wird in der US 2,771,773 das Drehmoment gemessen, welches auf eine zwischen Antriebsmotor und Meßrad angeordnete Zwischenwelle ausgeübt wird. Diese Zwischenwelle wird durch eine Feder, welche gerade das Leerlaufdrehmoment kompensiert, in ihrer Lage festgehalten. Das bei Beaufschlagung des Meßrads mit einem Massestrom auftretende größere Drehmoment wird pneumatisch kompensiert. Der dazu erforderliche und auf einem geeigneten Meßinstrument abgelesene Druck eines Arbeitsgases, ist ein Maß für das übertragene Drehmoment. Die vorgeschlagene Art der Druckregelung bedingt jedoch einen vergleichsweise hohen apparativen Aufwand und dadurch eine erhöhte Störanfälligkeit. Nachteilig ist außerdem die systembedingte lange Totzeit, welche für den Druckaufbau zur Kompensation des Drehmomentes benötigt wird und die Regelung pulsierender Schüttgutströme erschwert.

Eine gewisse Verbesserung wird erreicht, wenn gemäß der EP 0 474 121 B1 die Zwischenwelle tangential beweglich zur Welle des Meßrads bzw. zur Achse des Treibstirnrads des Antriebsmotors an einer Kraftmesseinrichtung aufgehängt ist. Die EP 0 474 121 B1 zielt jedoch darauf ab, die Meßeinrichtung auch für die Messung kleinerer Masseströme einsetzbar zu machen, indem störende Reibungseinflüsse im Getriebe, die z. B. von temperaturbedingten Viskositätsänderungen des Getriebeöls herrühren, weitgehend eliminiert werden. Eine ähnliche Aufgabenstellung wurde zuvor bereits in der DE 35 07 993 C2 beschrieben. An den in der DE 35 07 993 C2 sowie der EP 0 474 121 B1 vorgeschlagenen relativ aufwendigen Getriebeausführungen ist die kostenintensive Fertigung und die durch die Vielzahl an bewegten Teilen bedingte Störungsanfälligkeit von Nachteil.

In den in der DE 35 07 993 C2 sowie der EP 0 474 121 B1 beschriebenen Vorrichtungen wird eine möglichst große Krafteinwirkung der Zwischenwelle auf die Kraftmeßeinrichtung angestrebt. Aus diesem Grund trägt die das Meßrad tragende Welle ein Antriebsstirnrad mit möglichst kleinem Durchmesser. In der Praxis bedingt diese Ausführungsform jedoch den entscheidenden Nachteil einer geringen Nullpunktkonstanz, d. h., es treten auch im Leerlauf Schwankungen des Drehmoments auf. Eine ausreichende Nullpunktkonstanz ist aber die Voraussetzung dafür, kleine Masseströme im Bereich von 10 kg/min mit hoher Genauigkeit zu messen. Zudem gibt eine hohe Nullpunktkonstanz die Gewähr, daß auch kleine Änderungen in den gemessenen Masseströmen zuverlässig detektiert werden.

In der EP 0 857 953 A1 wird eine Verringerung des Meßfehlers, insbesondere bei der Messung von inhomogenem Material, beschrieben. Durch eine axial zentrische Zufuhr des Materials in das Meßrad und unter Modifikation der Meßradgeometrie wird angestrebt, den Nachteil einer seitlichen Zufuhr des Materials zu vermeiden und eine erhöhte Meßgenauigkeit zu erzielen. In der Praxis sind derartige Meßradformen bereits bekannt. Insbesondere erweisen sich die beschriebenen Geometrien vorteilhaft bei faserartigem Material. Eine erhöhte Nullpunktkonstanz und Verbesserung der Messgenauigkeiten für kleine Masseströme im Bereich 10 kg/min lässt sich nicht erzielen. Die beschriebene Messradgeometrie besitzt den Nachteil einer erforderlichen hohen Präzision in der Fertigung und der Notwendigkeit eines Verschleißschutzes bei abrasiven Materialien, um die für die Messgenauigkeit erforderliche Präzision im Langzeitbetrieb zu gewährleisten.

Aus der GB 711109 A ist ein Verfahren und eine Vorrichtung für Gewichtsmessung von Verbrauchsgütern in einem fließenden Medium bekannt. Dabei besitzt die Messvorrichtung eine Einström- und eine Ausströmöffnung, die in einer geraden Linie gegenüberliegend angeordnet sind und zwischen denen ein rotierender Körper vorgesehen ist. Allerdings stellt der rotierende Körper kein Flügelrad zur Messung der Coriolis-Kraft dar, so dass es sich dabei nicht um eine Coriolis-Messvorrichtung handelt.

Aus der US-A-5352647 ist zwar eine Coriolis-Messvorrichtung bekannt, bei der ein Schüttgutstrom seitlich auf ein horizontal angeordnetes Flügelrad geleitet wird, das mit einer konstanten Drehzahl antreibbar ist. Allerdings ist eine derartige Coriolis-Messvorrichtung nicht in einem vertikal fluchtenden Rohrsystem einbaubar, da durch die seitliche Schüttgutzuführung die Materialeintritts- und Austrittsöffnung nicht in einer geraden Linie übereinander angeordnet sind.

Aus der DE 3327594 A1 ist ein Verfahren zur Bestimmung des Massenflusses unter Verwendung eines Massenflussmessgerätes bekannt Dabei wird der Massestrom auf ein Flügelrad gelenkt, das mit einer konstanten Drehzahl angetrieben wird. Als Antriebsmotor ist dabei auch ein Asynchronmotor vorgesehen, dessen Antriebsleistung zur Messsignalauswertung dient. Allerdings offenbart das beschriebene Messverfahren keine Baumerkmale des verwendeten Massendurchflussgerätes.

In allen bekannten Ausführungsbeispielen wird das Schüttgut in der Art umgelenkt, dass der Austritt des gemessenen Schüttgutes nicht in senkrechter Achse unter dem Eintritt des Schüttguts liegt. Dies verhindert den Einsatz vor allem in den Fällen, in denen eine Messvorrichtung in bestehende Anlagen integriert werden soll. Typischerweise wird die Vorrichtung dort unterhalb eines Vorratsbehälters eingebaut, wobei die gegebene Rohrleitungsführung fluchtende Flansche zwischen Ein- und Austritt des Schüttguts bedingt und die maximale Einbauhöhe der Vorrichtung eng begrenzt ist Die genannten Aspekte behindern die breite Anwendbarkeit des Prinzips für viele erdenkliche Anwendungsfälle der Messung mehrphasiger Masseströme.

Aufgabe der vorliegenden Erfindung ist es, eine Vorrichtung zur Messung eines Massestromes mit hoher Nullpunktkonstanz und somit mit hoher Messgenauigkeit bereitzustellen, die kostengünstig herstellbar und robust im Betrieb ist und die die Nachteile des Standes der Technik vermeidet.

Diese Aufgabe wir durch eine Vorrichtung zum Messen eines Massestromes mit den Merkmalen des Patentanspruchs 1 gelöst. Vorteilhafte Ausgestaltungen der Erfindung werden in den Unteransprüchen beschrieben.

Erfindungsgemäß ist eine Vorrichtung zum Messen eines Massestroms gemäß Anspruch 1 mit einem von einer Welle getragenen Messrad vorgesehen, wobei das Messrad angetrieben ist und von dem Massestrom axial beaufschlagt wird, diesen umlenkt und ihm eine sowohl radiale als auch tangentiale Geschwindigkeitskomponente erteilt. Das vom Massestrom verursachte Bremsmoment dient dabei zur Quantifizierung des Massestroms. Die Welle trägt dabei ein Antriebsstirnrad, welches mit einem Zwischenstirnrad im Eingriff ist, das von einer Kraftmeßeinrichtung in seiner Lage festgehalten wird und einen zweiten Zahneingriff mit einem von einem Antriebsmotor angetriebenen Treibstirnrad aufweist, wobei der Durchmesser des Antriebsstirnrads größer als das 0,3-fache, vorzugsweise das 0,5- bis 1-fache des Durchmessers des Meßrads ist.

Die durch temperaturbedingte Viskositätsänderungen des Getriebeöls hervorgerufenen Reibungseinflüsse haben zumindest im Temperaturbereich oberhalb von 0 °C einen weitaus geringeren Einfluß auf die Meßgenauigkeit als bisher angenommen. In einem weiten Temperaturbereich kann deshalb auf die bekannten Maßnahmen zum Ausgleich von Reibungseinflüssen verzichtet werden. Eine erfindungsgemäße Vorrichtung besteht somit lediglich aus einem einfach aufgebauten Meßgetriebe niedriger Störanfälligkeit, wodurch sich Kostenvorteile bei Herstellung und Betrieb ergeben.

Dabei wird die erfindungsgemäße Vorrichtung vorteilhafterweise zum Messen eines vorzugsweise mehrphasigen Schüttgutstroms vorgesehen. Typischerweise werden Schüttgutströme im Bereich von 5 t/h bis 30 t/h gemessen. Aber auch die Messung von kleinen Schüttgutströmen ist mit der erfindungsgemäßen Vorrichtung möglich.

Bei der Bemessung des Antriebsstirnrads ist natürlich zu beachten, daß ein größerer Durchmesser dieses Stirnrades zunächst zu einer geringeren Meßkraft an der Zwischenwelle führt. Deshalb wird in der die Zwischenwelle haltenden Kraftmeßeinrichtung die Meßkraft über eine achsparallel zur Zwischenwelle gelagerte Hebelübersetzung geführt mit dem Ziel, die Meßkraft am Kraftaufnehmer zu erhöhen. Da das Schüttgut ohnehin in den Meßkanälen radial nach außen beschleunigt wird und erst am äußeren Rand des Meßrads eine erneute Umlenkung des Schüttgutstroms stattfindet, sind Getriebekonstruktionen möglich, bei denen das Antriebsstirnrad annähernd den Durchmesser des Meßrads aufweist, ohne daß dem Schüttgut ein nennenswerter zusätzlicher Widerstand entgegengesetzt wird. In der Regel wird aber bereits mit geringeren Durchmessern des Antriebsstirnrads eine ausreichende Nullpunktkonstanz zu erreichen sein. Die Kraftführung über eine Hebelübersetzung erlaubt außerdem die Verwendung an den Einsatzzweck angepaßter Kraftaufnehmer. Handelsübliche Kraftaufnehmer mit Meßbereichen unterhalb von 50 N sind nur für den Laborbetrieb geeignet. In einer erfindungsgemäßen Vorrichtung kann die Hebelübersetzung so gewählt werden, daß auch bei kleinen Masseströmen die Verwendung industrietauglicher Kraftaufnehmer mit Meßbereichen oberhalb 50 N möglich wird, damit auch im industriellen Einsatz die genaue Messung geringster Masseströme, die kleiner oder gleich 10 kg/min betragen, gelingt.

Das Meßgetriebe ist in einem Ausleger untergebracht, der in den Schüttgutstrom hineinragt. Vorteilhaft an dieser Anordnung ist, daß sich Eintritts- und Austrittsstelle des Schüttgutes unmittelbar untereinander in einer fluchtenden Linie befinden. Zudem besitzt diese Anordnung nur eine sehr geringe Einbauhöhe, die beispielsweise dem zweifachen Durchmesser des Meßrads entspricht. Die erfindungsgemäße Vorrichtung läßt sich somit leicht in eine bestehende Anlage integrieren, indem einfach ein kurzes gerades Rohrstück durch die Vorrichtung ersetzt wird.

Schließlich sieht eine weitere vorteilhafte Ausführungsform der vorliegenden Erfindung vor, daß der Antriebsmotor als elektrischer Asynchronmotor ausgebildet ist. Durch die Verwendung eines Asynchronmotors wird eine kostengünstige und nahezu wartungsfreie Antriebslösung zur Verfügung gestellt. In diesem Fall wird das Meßrad nicht mit konstanter Drehzahl angetrieben, weshalb die Antriebswelle des Antriebsmotors und/oder der Motor selbst mit einem Drehzahlmesser gekoppelt sind. Durch Vergleich bzw. Erfassung der Drehzahländerung der Antriebsmotordrehzahl während der Messung, kann das Bremsmoment und dadurch die Größe des Massestroms bestimmt werden.

Dabei kann die Welle des Antriebsmotors bei einer vorteilhaften Weiterbildung um 60° bis 120°, vorzugsweise um 90° zur Gehäuselängsachse versetzt angeordnet sein. Hierdurch läßt sich eine besonders platzsparende Bauweise realisieren.

Weitere Ausgestaltungen und Vorteile der Erfindung werden durch die Beschreibung der Ausführungsbeispiele unter Bezugnahme auf die beigefügten Zeichnungen erläutert. Darin zeigen:
- Fig. 1: eine schematische Seitenansicht einer erfindungsgemäßen Vorrichtung im Schnitt;
- Fig. 2: eine schematische Draufsicht, auf die Getriebeeinheit der erfindungsgemäßen Vorrichtung aus Figur 1;
- Fig. 3: eine schematische Draufsicht, auf die erfindungsgemäße Vorrichtung aus Figur 1.

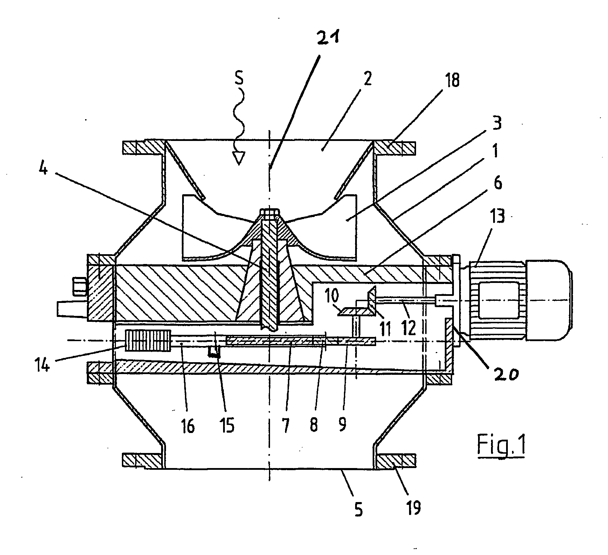

Die in Figur 1 schematisch in einer geschnittenen Seitenansicht dargestellte erfindungsgemäße Vorrichtung besteht aus einem Gehäuse 1, welches im vorliegenden Fall als Schweißkonstruktion ausgestaltet ist. Das Gehäuse 1 ist im wesentlichen rotationssymmetrisch ausgebildet und entspricht etwa zwei mit ihrer Basis aufeinanderstehenden Kegelstümpfen.

An seinem oberen Ende weist das Gehäuse 1 eine kreisförmige Materialeintrittsöffnung 2 auf, die von einem kreisförmigen Flansch 18 eingefaßt ist. An seinem unteren Ende weist das Gehäuse 1 eine kreisförmige Austrittsöffnung 5 auf, die ebenfalls von einem kreisförmigen Flansch 19 eingefaßt ist.

Ferner ist an einer Seite des Gehäuses 1 ein Antriebsflansch 20 zur Aufnahme eines Antriebsmotors 13 vorgesehen.

Das Gehäuse 1 weist unter der Materialeintrittsöffnung 2 im Inneren koaxial zur Gehäuselängsachse 21 ein mit radialen Leitschaufeln versehenes Meßrad 3 auf. Die Leitschaufeln weisen dabei im vorliegenden Ausführungsbeispiel eine leichte Profilierung auf.

Das Meßrad 3 ist in der Zeichnungsebene am oberen Ende einer vertikalen Welle 4 drehbar angeordnet. Der axial durch die Eintrittsöffnung 2 auf das Meßrads 3 einströmende Schüttgutstrom S wird durch das Meßrad 3 in radialer Richtung umgelenkt und sowohl in radialer als auch in tangentialer Richtung beschleunigt. Das vom Meßrad 3 herausgeschleuderte bzw. herabfallende Schüttgut wird an der Wandung des Gehäuses 1 umgelenkt und durch die Austrittsöffnung 5 aus dem Gehäuse 1 herausgeführt.

Die Umlenkung und Beschleunigung des Schüttgutstroms auf dem Meßrad 3 verursacht ein Bremsmoment an der Welle 4, das dem Schüttgutstrom direkt proportional ist. Die Messung des Schüttgutstroms erfolgt mittels eines in einem Getriebegehäuse 6 angeordneten Stirnradgetriebes, bestehend aus einem am unteren Ende der Welle 4 angeordneten Antriebsstirnrad 7, einem beweglichen, von einer Kraftmeßeinrichtung 14 in seiner Lage gehaltenen Zwischenstirnrad. 8 und einem Treibstirnrad 9. Im vorliegenden Ausführungsbeispiel beträgt der Durchmesser des Antriebsstirnrads 7 das 0,5-fache des Durchmessers des Meßrads 3.

Im dargestellten Ausführungsbeispiel wird das Treibstirnrad 9 über zwei Kegelräder 10, 11 von einer zur Achse des Treibstirnrads 9 um 90° versetzten Welle 12 eines Antriebsmotors 13 angetrieben. Hierdurch bewegt sich das Meßrad 3 mit konstanter Drehzahl. Die Umlenkung des Antriebsdrehmoments um 90° erlaubt eine besonders platzsparende Bauweise der erfindungsgemäßen Vorrichtung. Die Welle des Treibstirnrads 9 kann aber beispielsweise auch direkt vom Motor 13 angetrieben werden oder über ein Getriebe, eine Kette, einen Zahnriemen etc. in bekannter Art mit dem Motor 13 verbunden sein.

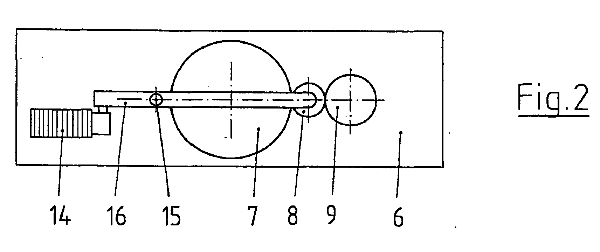

Figur 2 zeigt eine schematische Draufsicht auf die Getriebeeinheit der erfindungsgemäßen Vorrichtung aus Figur 1. Das bewegliche Zwischenstirnrad 8 wird hier über eine Hebelübersetzung von einer Kraftmeßeinrichtung 14 in seiner Lage gehalten. Bei der Kraftmeßeinrichtung 14 handelt es sich beispielsweise um einen handelsüblichen Kraftaufnehmer. Die Hebelübersetzung besteht aus einem im Lager 15 achsparallel zum Zwischenstirnrad 8 gelagerten Hebelarm 16. Die Hebelverhältnisse werden durch die unterschiedlichen Abstände zwischen dem Lager 15 und dem Zwischenstirnrad 8 einerseits und dem Lager 15 und der Kraftmeßeinrichtung 14 andererseits bestimmt. Die in Figur 1 und 2 gezeigte Kraftmeßeinrichtung 14 ist eine handelsübliche Biegestab- oder Torsions-Wägezelle.

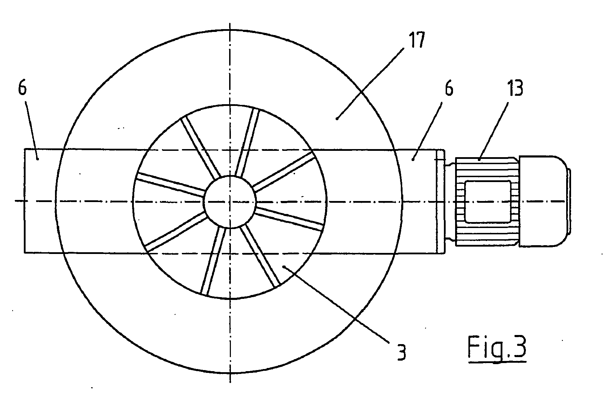

Figur 3 zeigt eine Draufsicht auf die erfindungsgemäße Vorrichtung nach Figur 1. Dabei ist das Getriebegehäuse 6 derart im Gehäuse 1 angeordnet, daß nur ein geringer Teil der für den freien Durchtritt von Schüttgut nach Umlenkung im Meßrad 3 zur Verfügung stehenden Fläche 17 durch das Gehäuse 6 versperrt wird. Die Montage in bestehende Anlagen erfolgt günstigerweise mittels eines Flansches 18 an der Eintrittsöffnung 2 bzw. mittels eines Flansches 19 an der Austrittsöffnung 5. Die Flansche 18 und 19 befinden sich in fluchtender Linie und ermöglichen somit den unproblematischen Einbau in eine bestehende Rohrleitung oder dergleichen.

Figur 3 veranschaulicht außerdem, daß der Durchmesser des Antriebsstirnrads 7 zur Erlangung einer besonders hohen Nullpunktkonstanz nahezu dem des Meßrades 3 entsprechen kann, ohne daß dadurch ein zusätzliches Hindernis für den Schüttgutstrom entsteht. Die daraus resultierende niedrigere Meßkraft am Zwischenstirnrad 8 könnte beispielsweise durch eine angepaßte Ausgestaltung von Hebelarm 16 und Lager 15 ausgeglichen werden. Versuche haben jedoch ergeben, daß ein Antriebsstitnrad 7 mit 0.5-fachem Durchmesser des Meßrads 3 bereits eine ausreichende Nullpunktkonstanz ergibt und eine erfindungsgemäße Vorrichtung mit diesem Größenverhältnis eine äußerst kompakte Bauform aufweist. Die Bauhöhe beträgt hier etwa den doppelten Meßraddurchmesser.

### BEZUGSZEICHENLISTE

- 1: Gehäuse
- 2: Materialeintrittsöffnung
- 3: Meßrad
- 4: Welle
- 5: Austrittsöffnung
- 6: Getriebegehäuse
- 7: Antriebsstirnrad
- 8: Zwischenstirnrad
- 9: Treibstirnrad
- 10: Kegelrad
- 11: Kegelrad
- 12: Welle
- 13: Antriebsmotor
- 14: Kraftmeßeinrichtung
- 15: Lager
- 16: Hebelarm
- 17: freie Fläche
- 18: Flansch an Eintrittsöffnung
- 19: Flansch an Austrittsöffnung
- 20: Antriebsflansch
- 21: Gehäuselängsachse

- S: Schüttgutstrom

## Patentansprüche

1. Vorrichtung zum Messen eines Massestroms mit einem von einer Welle (4) getragenen Messrad (3), das angetrieben ist und von dem Massestrom axial beaufschlagt wird, wobei die Welle (4) außerdem ein Antriebsstirnrad (7) trägt, das mit einem Zwischenstirnrad (8) im Eingriff steht, wobei das Zwischenstirnrad (8) von einer Kraftmesseinrichtung (14) in seiner Lage gehalten wird und mit einem Treibstirnrad (9) im Eingriff steht, das von einem Antriebsmotor (13) angetrieben wird, wobei der Durchmesser des Antriebsstirnrads (7) das 0,5- bis 1-fache des Durchmessers des Messrads (3) beträgt, **dadurch gekennzeichnet, dass** in einem Getriebegehäuse (6) in einer Ebene nebeneinander die ineinander greifenden Antriebs- (7), Zwischen- (8) und Treibstirnräder (9) als Stirnradgetriebe angeordnet sind, wobei das Getriebegehäuse (6) zwischen einer Materialeintrittsöffnung (2) und einer Austrittsöffnung (5) quer in den Massenstrom hineinragt, wobei die Materialeintrittsöffnung (2) und die Austrittsöffnung (5) in einem Gehäuse (1) unmittelbar untereinander auf einer fluchtenden Linie angeordnet sind, und dass zwischen dem Zwischenstirnrad (8) und der Kraftmessvorrichtung (14) ein achsparallel zum Zwischenstirnrad (8) gelagerter Hebelarm (16) zur Übertragung der Messkraft im Getriebegehäuse (6) vorgesehen ist.

2. Vorrichtung zum Messen eines Massestroms nach Patentanspruch 1, **dadurch gekennzeichnet, dass** die Vorrichtung zum Messen eines vorzugsweise mehrphasigen Schüttgutstroms vorgesehen ist.

3. Vorrichtung zum Messen eines Massestroms nach einem der vorangehenden Patentansprüche, **dadurch gekennzeichnet, dass** die Vorrichtung zur Messung sehr kleiner Masseströme, die kleiner oder gleich 10 kg/min betragen, vorgesehen ist.

4. Vorrichtung zum Messen eines Massestroms nach einem der vorangehenden Patentansprüche, **dadurch gekennzeichnet, dass** der Antriebsmotor (13) als elektrischer Asynchronmotor ausgebildet ist.

5. Vorrichtung zum Messen eines Massestroms nach einem der vorangehenden Patentansprüche, **dadurch gekennzeichnet, dass** die Welle (12) des Antriebsmotors (13) um 60° bis 120°, vorzugsweise um 90° zur Gehäuselängsachse (21) versetzt angeordnet ist.

## Claims

1. Device for measuring a mass flow with a measuring wheel (3), which is carried by a shaft (4) and is driven and is axially loaded by the mass flow, wherein the shaft (4) moreover carries an input spur gear (7) that is in mesh with an intermediate spur gear (8), wherein the intermediate spur gear (8) is held in position by a force-measuring device (14) and is in mesh with a driving spur gear (9) that is driven by a drive motor (13), wherein the diameter of the input spur gear (7) is 0.5 to 1 times the diameter of the measuring wheel (3), **characterized in that** in a gear unit housing (6) the mutually meshing input spur gear (7), intermediate spur gear (8) and driving spur gear (9) are disposed side by side in one plane as a spur gear unit, wherein the gear unit housing (6) between a material inlet opening (2) and an outlet opening (5) projects transversely into the mass flow, wherein the material inlet opening (2) and the outlet opening (5) are disposed one directly below the other in alignment in a housing (1), and **in that** between the intermediate spur gear (8) and the force-measuring device (14) there is provided in the gear unit housing (6) a lever arm (16) mounted with its axis parallel to that of the intermediate spur gear (8) for transmitting the measuring force.

2. Device for measuring a mass flow according to claim 1, **characterized in that** the device is provided for measuring a preferably multiphase bulk material flow.

3. Device for measuring a mass flow according to one of the preceding claims, **characterized in that** the device is provided for measuring very small mass flows that are less than or equal to 10 kg/min.

4. Device for measuring a mass flow according to one of the preceding claims, **characterized in that** the drive motor (13) takes the form of an asynchronous electric motor.

5. Device for measuring a mass flow according to one of the preceding claims, **characterized in that** the shaft (12) of the drive motor (13) is disposed offset by 60° to 120°, preferably by 90° relative to the housing longitudinal axis (21).

## Revendications

1. Dispositif pour la mesure d'un flux massique avec une roue de mesure (3) portée par un arbre (4), qui est entraînée et est sollicitée axialement par le flux massique, l'arbre (4) portant d'autre part une roue droite d'entraînement (7), qui est en prise avec une roue droite intermédiaire (8), la roue droite intermédiaire (8) étant maintenue dans sa position par un dispositif de mesure de force (14) et étant en prise avec une roue droite motrice (9), qui est entraînée par un moteur d'entraînement (13), le diamètre de la roue droite d'entraînement (7) représentant 0,5 à 1 fois le diamètre de la roue de mesure (3), **caractérisé en ce que** les roues droites d'entraînement (7), les roues droites intermédiaires (8) et les roues droites motrices (9) en prise les unes dans les autres sont disposées sous la forme d'un engrenage droit dans un plan les unes à côté des autres dans un carter d'engrenage (6), le carter d'engrenage (6) dépassant entre une ouverture d'entrée de matériau (2) et une ouverture de sortie (5) transversalement dans le flux massique, l'ouverture d'entrée de matériau (2) et l'ouverture de sortie (5) étant disposées dans un carter (1) directement l'une sous l'autre sur une ligne d'alignement, et **en ce que** entre la roue droite intermédiaire (8) et le dispositif de mesure de force (14) est prévu un bras de levier (16) logé parallèlement à l'axe de la roue droite intermédiaire (8) pour la transmission de la force de mesure dans le carter d'engrenage (6).

2. Dispositif pour la mesure d'un flux massique selon la revendication 1, **caractérisé en ce que** le dispositif est prévu pour la mesure d'un flux de produit en vrac de préférence à plusieurs phases.

3. Dispositif pour la mesure d'un flux massique selon l'une quelconque des revendications précédentes, **caractérisé en ce que** le dispositif est prévu pour la mesure de très petits flux massiques, qui sont inférieurs ou égaux à 10 kg/min.

4. Dispositif pour la mesure d'un flux massique selon l'une quelconque des revendications précédentes, **caractérisé en ce que** le moteur d'entraînement (13) est conçu comme un moteur asynchrone électrique.

5. Dispositif pour la mesure d'un flux massique selon l'une quelconque des revendications précédentes, **caractérisé en ce que** l'arbre (12) du moteur d'entraînement (13) est disposé de façon décalée de 60° à 120°, de préférence de 90° par rapport à l'axe longitudinal du carter (21).
